# EUROPÄISCHE PATENTSCHRIFT

(11) **EP 3 853 499 B1**
(45) Veröffentlichungstag und Bekanntmachung des Hinweises auf die Patenterteilung: **09.10.2024**
(21) Anmeldenummer: 19762711.0
(22) Anmeldetag: 28.08.2019
(51) Int. Cl.: F16H 1/46, F16H 57/04, F16H 57/08

(54) **GETRIEBE MIT ZUMINDEST EINER ERSTEN UND EINER ZWEITEN PLANETENGETRIEBESTUFE**
TRANSMISSION HAVING AT LEAST A FIRST AND A SECOND PLANETARY TRANSMISSION STAGE
TRANSMISSION COMPRENANT AU MOINS UN PREMIER ET UN DEUXIÈME ÉTAGE D'ENGRENAGE PLANÉTAIRE

(30) Priorität: 18.09.2018 DE 102018007355
(43) Veröffentlichungstag der Anmeldung: 28.07.2021
(73) Patentinhaber: SEW-EURODRIVE GmbH & Co. KG, 76646 Bruchsal (DE)
(72) Erfinder: DE MORAIS, Elvia Cristiano, 13332- 171 Indaiatuba - SP (BR); VIEIRA, Antonio Ventriglia, 13320-370 Salto-SP (BR)
(86) Internationale Anmeldenummer: PCT/EP2019/025286
(87) Internationale Veröffentlichungsnummer: WO 2020/057776

(56) Entgegenhaltungen:
- EP-A1- 2 479 458
- EP-A1- 2 479 458
- JP-A- 2016 125 506
- JP-A- 2016 125 506
- KR-A- 20150 001 335
- US-A- 4 365 525
- US-A- 4 365 525
- US-A- 5 616 097
- US-A- 5 616 097
- US-A1- 2016 025 187

## Beschreibung

Die Erfindung betrifft ein Getriebe mit zumindest einer ersten und einer zweiten Planetengetriebestufe.

Es ist allgemein bekannt, dass bei einer Planetengetriebestufe Planeten im Eingriff sind mit einem innenverzahnten Hohlrad und einem außenverzahnten Sonnenrad.

**Aus der** JP 2016-125 5065 A **ist ein Planetengetriebe bekannt.**

**Aus der** DE 10 2015 006 023 A1 **ist ein Getriebe mit einer in einem Flanschteil mittels eines Lagers gelagerten eintreibenden Welle bekannt.**

**Aus der** DE 20 2011 102 802 U1 **ist eine Anlaufscheibe bekannt.**

**Aus der** KR 10 2015 0 001 335 A **ist ein Verfahren zum Reduzieren der Reibung zwischen einem Ritzel und einem Gehäuse bekannt.**

**Aus der** US 4 365 525 A **A ist als nächstliegender Stand der Technik ein Dämpfer vom Getriebetyp bekannt.**

**Aus der** US 5 616 097 A **ist eine Planetengetriebestufe bekannt.**

**Aus der** JP 2016 125506 A **ist ein Planetengetriebe bekannt.**

**Aus der** EP 2 479 458 A1 **ist ein modular aufgebautes Planetengetriebe bekannt.**

**Aus der** KR 2015 0001335 A1 **ist eine Federdämpfungsanordnung mit einer Scheibe mit Kanälen bekannt.**

**Aus der** US 2016/025187 A1 **ist eine Scheibe mit Kanälen bekannt, die unter einem Lagerdeckel eingesetzt ist.**

Der Erfindung liegt daher die Aufgabe zugrunde, ein Getriebe weiterzubilden, wobei eine hohe Standzeit mit einem kompakten Aufbau des Getriebes erreichbar sein soll.

Erfindungsgemäß wird die Aufgabe bei dem Getriebe nach den in Anspruch 1 angegebenen Merkmalen gelöst.

Wichtige Merkmale der Erfindung bei dem Getriebe mit zumindest einer ersten und einer zweiten Planetengetriebestufe sind, dass die erste Planetengetriebestufe einen ersten Planetenträger mit Bolzen aufweist, auf welchen erste Planeten drehbar gelagert sind, die im Eingriff sind mit einem ersten Sonnenrad,
wobei die zweite Planetengetriebestufe einen zweiten Planetenträger mit Bolzen aufweist, auf welchen zweite Planeten drehbar gelagert sind, die im Eingriff sind mit einem zweiten Sonnenrad,
wobei der erste Planetenträger drehfest verbunden ist mit dem zweiten Sonnenrad
wobei mittig im ersten Planetenträger in einer Ausnehmung, insbesondere in einer axial durchgehenden Ausnehmung, eine Scheibe aufgenommen ist,
welche axial zwischen dem ersten Sonnenrad und dem zweiten Sonnenrad angeordnet ist.

Von Vorteil ist dabei, dass die Scheibe als Beabstandungsmittel verwendbar ist, so dass die beiden Sonnenräder voneinander entfernt gehalten werden, wodurch die Standzeit erhöht ist. Somit ist nur eine axial dünne Scheibe zwischenzuordnen und daher ein kompakter Aufbau erreicht. Außerdem ist die Scheibe zur Verbesserung der Schmierversorgung einsetzbar, so dass die Standzeit des Getriebes auch deswegen sich erhöht

Bei einer vorteilhaften Ausgestaltung ist das erste und/oder das zweite Sonnenrad hohl ausgeführt. Von Vorteil ist dabei, dass Schmieröl durch die Sonnenräder bis zur Scheibe gelangt und dort durch das mittig in der Scheibe angeordnete Loch hindurchtritt, so dass ein radial verlaufender Kanal als Schmierkanal verwendbar ist.

Bei einer vorteilhaften Ausgestaltung ist die Scheibe koaxial zum ersten und/oder zweiten Sonnenrad angeordnet. Von Vorteil ist dabei, dass die Anordnung ausgewuchtet ist. Außerdem durchdringt die Drehachse das mittig in der Scheibe angeordnete Loch und ermöglicht somit eine stetige Schmiermittelzufuhr. Hingegen wäre bei einer nicht mittigen Anordnung eine stetige Schmiermittelzufuhr nicht sicher gewährleistbar.

Bei einer vorteilhaften Ausgestaltung enthält der von der Scheibe überdeckte Radialabstandsbereich den von dem ersten Sonnenrad überdeckten Radialabstandsbereich,
insbesondere wobei der von der Scheibe überdeckte Radialabstandsbereich den von dem zweiten Sonnenrad überdeckten Radialabstandsbereich umfasst oder mit ihm überlappt. Von Vorteil ist dabei, dass ein vollständiger Schutz gegen gegenseitige Berührung der beiden Sonnenräder gewährleistbar ist.

Bei einer vorteilhaften Ausgestaltung ist die Scheibe kraftschlüssig im ersten Planetenträger gehalten, insbesondere mittels eines Sprengrings. Von Vorteil ist dabei, dass eine einfache und kostengünstige Befestigungsmethode anwendbar ist.

Bei einer vorteilhaften Ausgestaltung weist der erste Planetenträger eine axial durchgehende Stufenbohrung auf,
wobei die Scheibe gegen eine erste Stufe der Stufenbohrung ansteht,
insbesondere wobei ein Lager eines ersten Planeten gegen eine zweite Stufe der Stufenbohrung ansteht. Von Vorteil ist dabei, dass eine sichere Befestigung der Scheibe erreichbar ist. Außerdem steht das erste Sonnenrad auf der von der ersten Stufe abgewandten Seite der Scheibe an der Scheibe an. Somit wird die Scheibe gegen die erste Stufe gedrückt und ist somit sicher gehalten.

Bei einer vorteilhaften Ausgestaltung ist die Scheibe aus Stahl gefertigt ist und nitrierbehandelt. Von Vorteil ist dabei, dass eine einfache Herstellung und niedrige Reibwerte erreichbar sind.

Erfindungsgemäß weist die Scheibe ein mittig angeordnetes, axial durchgehendes Loch auf. Von Vorteil ist dabei, dass Schmieröl durch das Loch, also ohne Einwirkung von Zentrifugalkraft, hindurchtritt. Denn bei dem hier verschwindenden Radialabstand verschwindet auch die Zentrifugalkraft.

Erfindungsgemäß sind an der dem ersten Sonnenrad zugewandten Seite der Scheibe eine oder mehrere Vertiefungen ausgebildet, welche sich jeweils vom mittig angeordneten, axial durchgehenden Loch zum radial äußeren Rand der Scheibe erstrecken, insbesondere so, dass jeweils ein von der Scheibe und dem ersten Sonnenrad begrenzter Kanal gebildet ist,

Bei einer vorteilhaften Ausgestaltung so, dass die Vertiefungen und/oder Kanäle in Umfangsrichtung voneinander regelmäßig beabstandet sind. Von Vorteil ist dabei, dass Schmieröl durch das Loch hindurchtritt und dann radial förderbar ist. Auf diese Weise sind die auf nicht verschwindendem Radialabstand angeordneten Planeten in einfacher Weise schmierbar, insbesondere deren Nadellager; denn die Planeten sind mittels Nadellagern gelagert, die auf Bolzen des Planetenträgers aufgeschoben sind.

Bei einer vorteilhaften Ausgestaltung nimmt der Kanalquerschnitt mit zunehmendem Radialabstand zunächst zu und danach ab. Von Vorteil ist dabei, dass durch den mit zunehmendem Radialabstand bis zu einem Maximalwert zunehmenden Kanalquerschnitt ein Puffervolumen geschaffen ist, das auch bei unstetigem Befüllen mit Schmieröl einen stetigen Ausfluss auf noch größerem Radialabstand ermöglicht, da der Kanalquerschnitt vom Maximalwert an wieder abnimmt, wenn der Radialabstand weiter zunimmt. Der Kanal mündet dann auf diesem größten Radialabstand zu den Planeten hin, insbesondere zu deren Lagern hin.

Bei einer vorteilhaften Ausgestaltung weist das Getriebe eine **dritte Planetengetriebestufe** auf,
wobei die dritte Planetengetriebestufe einen dritten Planetenträger mit dritten Bolzen
aufweist, auf welchen dritte Planeten drehbar gelagert sind, die im Eingriff sind mit einem dritten Sonnenrad,
wobei der dritte Planetenträger drehfest verbunden ist mit dem ersten Sonnenrad (30)
wobei mittig im dritten Planetenträger in einer Ausnehmung, insbesondere in einer axial durchgehenden Ausnehmung, eine weitere Scheibe aufgenommen ist,
welche axial zwischen dem ersten Sonnenrad und dem dritten Sonnenrad angeordnet ist, wobei das dritte Sonnenrad als Vollteil, also nicht hohl, ausgeführt ist. Von Vorteil ist dabei, dass eine weitere Scheibe axial vor der ersten Sonnenradwelle angeordnet ist, die bauähnlich zur oben genannten Scheibe ausgeführt ist, aber an einer dritten Sonnenradwelle ansteht, welche als Vollteil ausgeführt ist. Somit ist kein Schmieröltransport in axialer Richtung durch die weitere Scheibe und die dritte Sonnenradwelle hindurch ermöglicht, sondern das Schmieröl muss durch eine weitere Vertiefung der weiteren Scheibe nach radial außen transportiert werden zu einem Lager hin. Das entsprechende weitere Loch der weiteren Scheibe mündet also nur in den durch die weitere Vertiefung gebildeten Kanal, nicht aber auch in einen axial durch die dritte Sonnenradwelle hindurchgehenden Kanal.

Erfindungsgemäß weist der jeweilige Planetenträger an seinem radialen Außenumfang an einer Umfangsstelle, insbesondere also in einem ersten Umfangswinkelbereich, eine nach radial innen gerichtete Vertiefung, insbesondere Kerbe, auf, welche axial durchgehend ausgeführt ist. Somit ist eine Drehzahlüberwachung mittels eines im Getriebeinneren angeordneten Sensors in einfacher Weise ermöglicht.

Die Erfindung wird nun anhand von schematischen Abbildungen näher erläutert:
In der Figur 1 ist ein Planetenträger 2, 32 eines erfindungsgemäßen Getriebes mit Scheibe 3 in Draufsicht dargestellt.
In der Figur 2 die Scheibe 3 zum Planetenträger 2, 32 explodiert in Schrägansicht dargestellt.
In der Figur 3 ist das Getriebe in Schnittansicht dargestellt.
In der Figur 4 ist ein Ausschnitt **Z der in** **Figur 3** **gezeigten Schnittansicht** des Getriebes vergrößert dargestellt.

Wie in den Figuren dargestellt, weist das Getriebe Planetengetriebestufen mit Sonnenrädern auf, zwischen denen axial zwischengeordnet eine Scheibe 3 angeordnet ist.

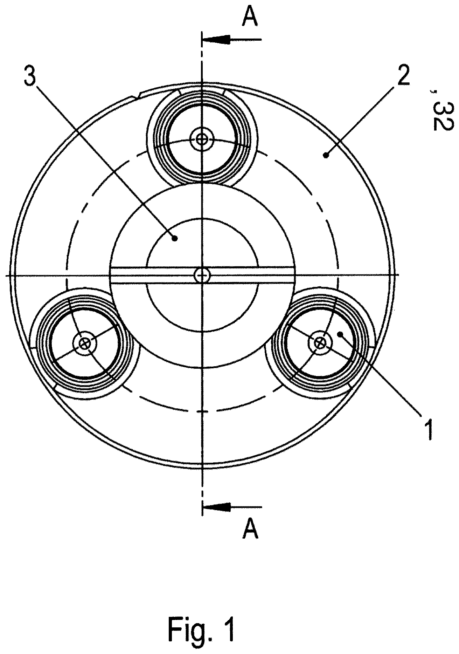

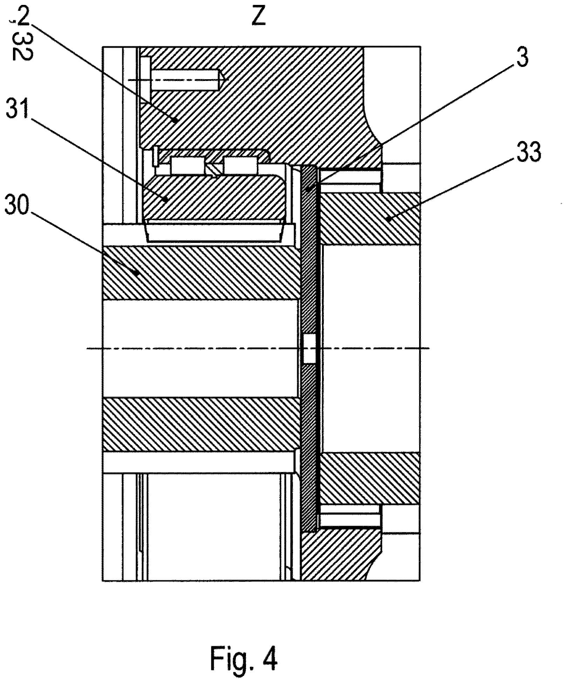

Wie in Figur 1 und Figur 4 gezeigt, weist die Scheibe 3 ein mittig in ihr angeordnetes durchgehendes Loch, insbesondere Bohrloch auf und eine radial sich erstreckende Vertiefung, insbesondere Nut. Dabei erstreckt sich die Vertiefung vom Loch zum radial äußeren Rand der Scheibe 3.

Auf diese Weise ist Schmieröl bei Drehbewegung der Scheibe 3 radial vom Loch nach radial weiter außen förderbar.

Die Scheibe ist aus Stahl gefertigt und danach einer Nitrierbehandlung unterzogen, so dass der Reibwert bezogen auf die beiden die Scheibe 3 berührenden Sonnenräder (30, 33) vermindert ist. Außerdem ist die Scheibe somit gehärtet und weniger deformierbar.

Die Scheibe ist in einer mittig angeordneten, axial durchgehenden Ausnehmung des Planetenträgers 2, 32 aufgenommen.

Vorzugsweise ist die Scheibe 3 kraftschlüssig im Planetenträger 2, 32 gehalten, insbesondere mittels eines Sprengrings.

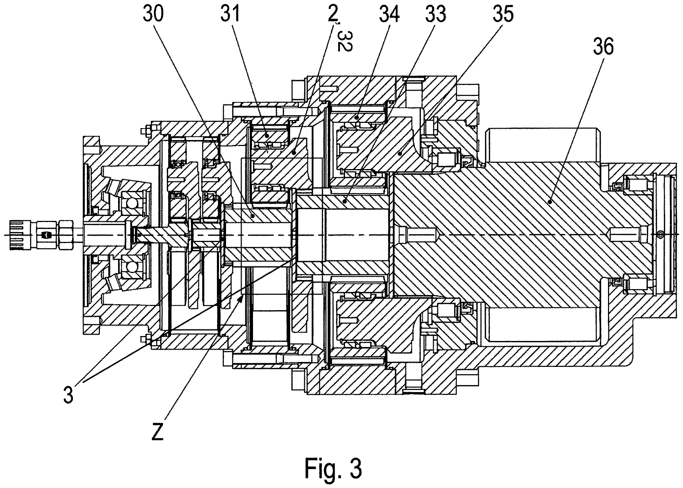

Wie in den Figuren 3 und 4 gezeigt, wird das erste Sonnenrad 30 angetrieben, insbesondere von vorgeordneten Getriebestufen, insbesondere Planetengetriebestufen, und steht im Eingriff ersten Planeten 31, welche auf Planetenbolzen 1 gelagert sind, die formschlüssig mit dem Planetenträger 2, 32 verbunden oder einstückig mit diesem ausgeformt sind.

Der Planetenträger 2, 32 treibt ein zweites Sonnenrad 33 an, mit dem er zumindest drehfest verbunden ist oder einstückig ausgebildet ist.

Das zweite Sonnenrad 33 ist im Eingriff mit den zweiten Planeten 34, welche wiederum auf Bolzen gelagert sind, welche formschlüssig mit dem zweiten Planetenträger 35 verbunden oder einstückig mit diesem ausgeformt sind.

Der zweite Planetenträger 35 treibt eine abtreibende Welle 36 des Getriebes an, die aber auch als eintreibende Welle einer abtreibenden Getriebestufe ausbildbar ist.

Somit ist die Scheibe 3 aufgenommen im Planetenträger 2, 32 und axial zwischen dem ersten Sonnenrad 30 und dem zweiten Sonnenrad 33 angeordnet. Dadurch wird eine direkte Berührung der beiden Sonnenräder (30, 33) verhindert.

Da außerdem das durch das mittig in der Scheibe 3 eintretende Öl radial herausgefördert wird, ist eine verbesserte Schmierung, insbesondere der Planeten 31 erreichbar.

Die ersten Planeten 31 stehen jeweils im Eingriff mit einem ersten innenverzahnten Hohlrad, welches auch als Gehäuseteil fungiert.

Die zweiten Planeten 34 stehen jeweils im Eingriff mit einem zweiten innenverzahnten Hohlrad, welches auch als weiteres Gehäuseteil fungiert.

Die Hohlräder sind miteinander dicht, also in hoher Schutzart, verbunden, insbesondere schraubverbunden.

Vorzugsweise ist die mittig angeordnete, axial durchgehende Ausnehmung des Planetenträgers 2, 32 als Stufenbohrung ausgeführt, so dass die Scheibe 3 gegen eine Stufe der Stufenbohrung ansteht. Da das erste Sonnenrad 30 stirnseitig, also im Bereich der Berührung der Scheibe 3, Stahl aufweist, weist das erste Sonnenrad 30 somit einen niedrigen Reibwert zur nitrierbehandelten Scheibe 3 auf.

Da das zweite Sonnenrad 33 stirnseitig, also im Bereich der Berührung der Scheibe 3, Stahl aufweist, weist das zweite Sonnenrad 33 somit einen niedrigen Reibwert zur nitrierbehandelten Scheibe 3 auf.

Eine gegenseitige Verschweißung der beiden Sonnenräder (30, 33) ist somit verhindert.

Die beiden Sonnenräder (30, 33) sind als Hohlteile ausgeführt. Somit weisen sie jeweils eine mittig angeordnete axial durchgehende Ausnehmung, insbesondere Bohrung, auf.

Da die Vertiefung begrenzt ist von der Scheibe 3 und dem ersten Sonnenrad 30, führt der so gebildete Kanal vom Hohlraum des ersten Sonnenrads 30 nach radial außen und mündet in dem von Nadellagern der ersten Planeten 31 überdeckten Radialabstandsbereich.

Dabei sind die Nadellager auf den Bolzen 1 aufgesteckt und die Planeten 31 auf die Nadellager. Außerdem fließt das durch den Kanal radial geförderte Schmieröl auch in den Beriech der Verzahnungen der Planeten 31.

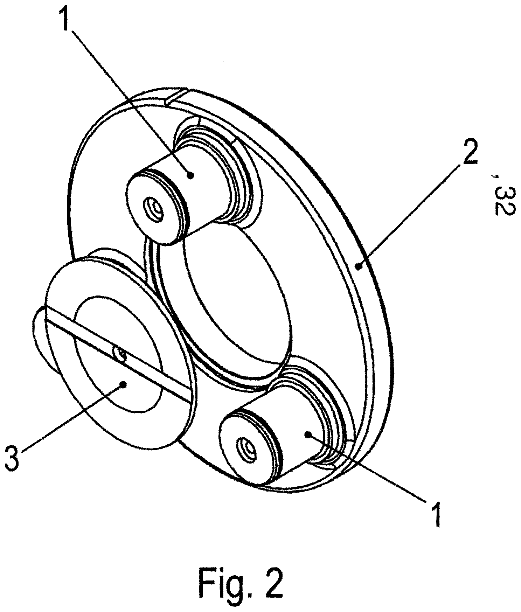

Wie in den Figuren 1 und 2 gezeigt, ist der Kanal radial beidseitig durchgehend, also an einer ersten Umfangsposition vom mittig angeordneten Loch nach radial außen und an einer in Umfangsrichtung um 180° verschobenen Position ebenfalls vom mittig angeordneten Loch nach radial außen.

Der Kanalquerschnitt ist unabhängig vom Radialabstand ausgeführt.

Bei weiteren erfindungsgemäßen Ausführungsbeispielen werden drei oder mehr solcher vom mittig angeordneten Loch nach radial außen verlaufenden Kanäle in der Scheibe 3 vorgesehen, insbesondere wobei die Kanäle in Umfangsrichtung voneinander regelmäßig beabstandet sind.

Bei weiteren erfindungsgemäßen Ausführungsbeispielen ist der jeweilige Kanalquerschnitt mit zunehmendem Radialabstand verjüngt ausgeführt. Somit tritt das Öl kontinuierlicher aus. Bei weiteren erfindungsgemäßen Ausführungsbeispielen wird der Kanalquerschnitt mit zunehmendem Radialabstand zunächst vergrößert und danach wieder verringert. Auf diese Weise ist ein kontinuierlicher Ölfluss mit hoher Geschwindigkeit gewährleistbar, weil der vergrößerte Kanalquerschnitt als Puffer wirkt und wegen des größeren Radialabstands einer hohen Zentrifugalkraft ausgesetzt ist. Auch wenn also das Nachströmen von Öl durch das Loch unregelmäßig verläuft, ist ein stetes Ausströmen erreichbar.

Wie in den Figuren gezeigt, ist die axial vor und hinter der Scheibe 3 angeordnete jeweilige Sonnenradwelle hohl ausgeführt, weist also eine axial durchgehende Bohrung auf. Eine der Sonnenradwellen ist aber bei weiteren erfindungsgemäßen Ausführungsbeispielen als Vollteil ausführbar, also ohne axial durchgehende mittige Ausnehmung. In diesem Fall kann dann das Schmieröl nicht mehr von der axial vor der Scheibe angeordneten Sonnenradwelle durch das Loch der Scheibe zu der axial hinter der Scheibe angeordneten Sonnenradwelle hindurchströmen, sondern muss durch den durch die Vertiefung gebildeten Kanal nach radial außen strömen, so dass ein dort angeordnetes Lager schmierbar ist.

An einer Umfangsstelle weist der jeweilige Planetenträger eine axial durchgehende Kerbe, also radial gerichtete Vertiefung an seinem Außenumfang, auf. Somit ist nicht nur eine bessere Durchmischung des Schmieröls und dadurch ein verbesserter thermischer Ausgleich bewirkbar, sondern auch eine Drehzahlüberwachung des Planetenträgers durch einen im Gehäuse des Getriebes angeordneten Sensor, insbesondere induktiven Näherungssensors.

### Bezugszeichenliste

1 Bolzenabschnitt
2 Planetenträger
3 Scheibe
30 erstes Sonnenrad
31 erster Planet
32 erster Planetenträger
33 zweites Sonnenrad
34 zweiter Planet
35 zweiter Planetenträger
36 Abtriebswelle
Z Ausschnitt

## Patentansprüche

1. Getriebe mit zumindest einer ersten und einer zweiten Planetengetriebestufe,
wobei die erste Planetengetriebestufe einen ersten Planetenträger (32) mit Bolzen (1) aufweist, auf welchen erste Planeten (31) drehbar gelagert sind, die im Eingriff sind mit einem ersten Sonnenrad (30),
wobei die zweite Planetengetriebestufe einen zweiten Planetenträger (35) mit Bolzen aufweist, auf welchen zweite Planeten (34) drehbar gelagert sind, die im Eingriff sind mit einem zweiten Sonnenrad (33),
wobei der erste Planetenträger (32) drehfest verbunden ist mit dem zweiten Sonnenrad (33) **wobei** mittig im ersten Planetenträger (32) in einer Ausnehmung, insbesondere in einer axial durchgehenden Ausnehmung, eine Scheibe (3) aufgenommen ist,
welche axial zwischen dem ersten Sonnenrad (30) und dem zweiten Sonnenrad (33) angeordnet ist,
**dadurch gekennzeichnet, dass**
**an der dem ersten Sonnenrad (30) zugewandten Seite der Scheibe (3) eine oder mehrere Vertiefungen ausgebildet sind, welche sich jeweils** von einem **mittig angeordneten,**
**axial durchgehenden Loch zum radial äußeren Rand der Scheibe (3) erstrecken, insbesondere so, dass jeweils ein von der Scheibe (3) und dem ersten Sonnenrad (30) begrenzter Kanal gebildet ist,**
**wobei der jeweilige Planetenträger eine axial durchgehende Kerbe, also radial gerichtete Vertiefung, an seinem Außenumfang, aufweist zur besseren Durchmischung des Schmieröls.**

2. Getriebe nach Anspruch 1,
**dadurch gekennzeichnet, dass**
das erste und/oder das zweite Sonnenrad (30, 33) hohl ausgeführt ist.

3. Getriebe nach einem der vorangegangenen Ansprüche,
**dadurch gekennzeichnet, dass**
die Scheibe (3) koaxial zum ersten und/oder zweiten Sonnenrad (30, 33) angeordnet ist.

4. Getriebe nach einem der vorangegangenen Ansprüche,
**dadurch gekennzeichnet, dass**
ein von der Scheibe (3) überdeckte Radialabstandsbereich einen von dem ersten Sonnenrad (30) überdeckten Radialabstandsbereich enthält,
insbesondere wobei der von der Scheibe (3) überdeckte Radialabstandsbereich den von dem zweiten Sonnenrad (33) überdeckten Radialabstandsbereich umfasst oder mit ihm überlappt.

5. Getriebe nach einem der vorangegangenen Ansprüche,
**dadurch gekennzeichnet, dass**
die Scheibe (3) kraftschlüssig im ersten Planetenträger (32) gehalten ist, insbesondere mittels eines Sprengrings.

6. Getriebe nach einem der vorangegangenen Ansprüche,
**dadurch gekennzeichnet, dass**
der erste Planetenträger (32) eine axial durchgehende Stufenbohrung aufweist,
wobei die Scheibe (3) gegen eine erste Stufe der Stufenbohrung ansteht,
insbesondere wobei ein Lager eines ersten Planeten (31) gegen eine zweite Stufe der Stufenbohrung ansteht.

7. Getriebe nach einem der vorangegangenen Ansprüche,
**dadurch gekennzeichnet, dass**
**die Scheibe (3) aus Stahl gefertigt ist und nitrierbehandelt ist.**

8. Getriebe nach einem der vorangegangenen Ansprüche,
**dadurch gekennzeichnet, dass**
**die Vertiefungen und/oder Kanäle in Umfangsrichtung voneinander regelmäßig beabstandet sind.**

9. Getriebe nach einem der vorangegangenen Ansprüche wobei ein von der Scheibe (3) und dem ersten Sonnenrad (30) begrenzter Kanal gebildet ist,
**dadurch gekennzeichnet, dass**
ein Kanalquerschnitt mit zunehmendem Radialabstand zunächst zunimmt und danach abnimmt.

10. Getriebe nach einem der vorangegangenen Ansprüche wobei ein von der Scheibe (3) und dem ersten Sonnenrad (30) begrenzter Kanal gebildet ist,
**dadurch gekennzeichnet, dass**
das Loch in die Vertiefung und/oder in den Kanal mündet, insbesondere so dass durch das Loch eingetretenes Schmieröl durch den Kanal nach radial außen gefördert wird.

11. Getriebe nach einem der vorangegangenen Ansprüche,
**dadurch gekennzeichnet, dass**
das Getriebe eine **dritte Planetengetriebestufe** aufweist,
wobei die dritte Planetengetriebestufe einen dritten Planetenträger (2) mit dritten Bolzen aufweist, auf welchen dritte Planeten drehbar gelagert sind, die im Eingriff sind mit einem dritten Sonnenrad,
wobei der dritte Planetenträger (2) drehfest verbunden ist mit dem ersten Sonnenrad (30)
wobei mittig im dritten Planetenträger (2) in einer Ausnehmung, insbesondere in einer axial durchgehenden Ausnehmung, eine weitere Scheibe (3) aufgenommen ist,
welche axial zwischen dem ersten Sonnenrad (30) und dem dritten Sonnenrad angeordnet ist,
wobei das dritte Sonnenrad als Vollteil, also nicht hohl, ausgeführt ist

## Claims

1. A gear unit having at least a first and a second planetary gear stage,
wherein the first planetary gear stage has a first planet carrier (32) with bolts (1) on which there are rotatably mounted first planets (31) meshing with a first sun wheel (30),
wherein the second planetary gear stage has a second planet carrier (35) with bolts on which there are rotatably mounted second planets (34) meshing with a second sun wheel (33),
wherein the first planet carrier (32) is connected to the second sun wheel (33) in a rotationally-fixed manner,
wherein a disc (3) is received in a cutout in the centre of the first planet carrier (32), in particular in an axially through-passing cutout,
which disc is arranged axially between the first sun wheel (30) and the second sun wheel (33),
**characterised in that**
one or a plurality of depressions is formed at that side of the disc (3) facing the first sun wheel (30), which depressions in each case extend from a centrally arranged, axially through-passing hole to the radially outer edge of the disc (3), in particular so that in each case there is formed a channel bounded by the disc (3) and the first sun wheel (30),
wherein for better thorough mixing of the lubricating oil, the respective planet carrier has an axially through-passing notch, therefore radially directed depression, at its outer circumference.

2. A gear unit according to claim 1,
**characterised in that**
the first and/or the second sun wheel (30, 33) is/are hollow.

3. A gear unit according to any one of the preceding claims,
**characterised in that**
the disc (3) is arranged coaxially with the first and/or second sun wheel (30, 33).

4. A gear unit according to any one of the preceding claims,
**characterised in that**
a radial distance region covered by the disc (3) encompasses a radial distance region covered by the first sun wheel (30),
in particular wherein the radial distance region covered by the disc (3) comprises the radial distance region covered by the second sun wheel (33) or overlaps therewith.

5. A gear unit according to any one of the preceding claims,
**characterised in that**
the disc (3) is held in the first planet carrier (32) in a force-locked manner, in particular by means of a snap ring.

6. A gear unit according to any one of the preceding claims,
**characterised in that**
the first planet carrier (32) has an axially through-passing stepped bore, wherein the disc (3) rests against a first step of the stepped bore,
in particular wherein a bearing of a first planet (31) rests against a second step of the stepped bore.

7. A gear unit according to any one of the preceding claims,
**characterised in that**
the disc (3) is manufactured of steel and is subjected to a nitriding treatment.

8. A gear unit according to any one of the preceding claims,
**characterised in that**
the depressions and/or channels are regularly spaced apart from one another in a circumferential direction.

9. A gear unit according to any one of the preceding claims,
wherein a channel bounded by the disc (3) and the first sun wheel (30) is formed,
**characterised in that**
a channel cross-section firstly increases as the radial distance increases, and thereafter decreases.

10. A gear unit according to any one of the preceding claims,
wherein a channel bounded by the disc (3) and the first sun wheel (30) is formed,
**characterised in that**
the hole issues into the depression and/or into the channel, in particular so that lubricating oil which has entered through the hole is conveyed radially outwards through the channel.

11. A gear unit according to any one of the preceding claims,
**characterised in that**
the gear unit has a third a third planetary gear stage,
wherein the third planetary gear stage has a third planet carrier (2) with third bolts on which there are rotatably mounted third planets which engage a third sun wheel,
wherein the third planet carrier (2) is connected to the first sun wheel (30) in a rotationally-fixed manner,
wherein a further disc (3) is received in a cutout in the centre of the third planet carrier (2), in particular in an axially through-passing cutout,
which disc is arranged axially between the first sun wheel (30) and the third sun wheel,
wherein the third sun wheel is in the form of a solid part, therefore not hollow.

## Revendications

1. Transmission comprenant au moins des premier et deuxième étages d'engrenage planétaire, le premier étage d'engrenage planétaire présentant un premier porte-satellites (32) avec des axes (1) sur lesquels sont montées rotatifs des premiers satellites (31) qui sont en prise avec une première roue solaire (30),
le deuxième étage d'engrenage planétaire comprenant un deuxième porte-satellites (35) avec des axes sur lesquels sont montées rotatifs des deuxièmes satellites (34) qui sont en prise avec une deuxième roue solaire (33),
le premier porte-satellites (32) étant relié de manière solidaire en rotation à la deuxième roue solaire (33), un disque (3) étant accueilli dans un évidement, en particulier dans un évidement axialement continu, au centre du premier porte-satellites (32),
ledit disque étant agencé de manière axiale entre la première roue solaire (30) et la deuxième roue solaire (33),
**caractérisée en ce que**
sur le côté du disque (3) qui est tourné vers la première roue solaire (30), une ou plusieurs cavité(s) est/sont formée(s), qui s'étend(ent) respectivement entre un trou axialement continu agencé de manière centrale et le bord radialement extérieur du disque (3), en particulier de sorte qu'un canal délimité par le disque (3) et la première roue solaire (30) est respectivement formé,
le porte-satellites respectif présentant au niveau de sa périphérie extérieure une encoche axialement continue, et donc une cavité radialement orientée, en vue d'un meilleur mélange de l'huile de lubrification.

2. Transmission selon la revendication 1,
**caractérisée en ce que**
la première et/ou la deuxième roue solaire (30, 33) est/sont réalisée(s) creuse(s).

3. Transmission selon l'une quelconque des revendications précédentes,
**caractérisée en ce que**
le disque (3) est agencé de manière coaxiale par rapport à la première et/ou à la deuxième roue solaire (30, 33).

4. Transmission selon l'une quelconque des revendications précédentes,
**caractérisée en ce que**
une région d'espacement radial recouverte par le disque (3) contient une région d'espacement radial recouverte par la première roue solaire (30),
la région d'espacement radial recouverte par le disque (3) comprenant ou chevauchant en particulier la région d'espacement radial recouverte par la deuxième roue solaire (33).

5. Transmission selon l'une quelconque des revendications précédentes,
**caractérisée en ce que**
le disque (3) est retenu par complémentarité de force dans le premier porte-satellites (32), en particulier au moyen d'une bague de sûreté.

6. Transmission selon l'une quelconque des revendications précédentes,
**caractérisée en ce que**
le premier porte-satellites (32) présente un alésage à étages axialement continu,
le disque (3) se trouvant contre un premier étage de l'alésage à étages,
un palier d'un premier satellite (31) se trouvant en particulier contre un deuxième étage de l'alésage à étages.

7. Transmission selon l'une quelconque des revendications précédentes,
**caractérisée en ce que**
le disque (3) est fabriqué à partir d'acier et est traité par nitration.

8. Transmission selon l'une quelconque des revendications précédentes,
**caractérisée en ce que**
les cavités et/ou les canaux sont régulièrement espacé(e)s les un(e)s des autres dans la direction circonférentielle.

9. Transmission selon l'une quelconque des revendications précédentes, où un canal délimité par le disque (3) et par la première roue solaire (30) est formé,
**caractérisée en ce que**
la section transversale de canal augmente d'abord avec l'augmentation de l'espacement radial, puis diminue.

10. Transmission selon l'une quelconque des revendications précédentes, où un canal délimité par le disque (3) et par la première roue solaire (30) est formé,
**caractérisée en ce que**
le trou débouche dans la cavité et/ou dans le canal, en particulier de sorte que de l'huile de lubrification ayant pénétré par le trou est transportée radialement vers l'extérieur à travers le canal.

11. Transmission selon l'une quelconque des revendications précédentes,
**caractérisée en ce que**
la transmission présente un troisième étage d'engrenage planétaire,
le troisième étage d'engrenage planétaire présentant un troisième porte-satellites (2) avec des troisièmes axes sur lesquels sont montés rotatifs des troisièmes satellites qui sont en prise avec une troisième roue solaire,
le troisième porte-satellites (2) étant relié de manière solidaire en rotation à la première roue solaire (30),
un disque (3) supplémentaire étant accueilli dans un évidement, en particulier dans un évidement axialement continu, au centre du troisième porte-satellites (2),
ledit disque étant agencé de manière axiale entre la première roue solaire (30) et la troisième roue solaire,
la troisième roue solaire étant réalisée sous la forme d'une pièce pleine, c'est-à-dire non creuse.
